# EUROPÄISCHE PATENTSCHRIFT

(11) **EP 3 171 366 B1**
(45) Veröffentlichungstag und Bekanntmachung des Hinweises auf die Patenterteilung: **27.12.2017**
(21) Anmeldenummer: 16199173.2
(22) Anmeldetag: 16.11.2016
(51) Int. Cl.: H01B 7/18, H01B 7/295, G02B 6/44

(54) **KABEL UND VERFAHREN ZU DESSEN HERSTELLUNG**
CABLE AND METHOD FOR ITS PRODUCTION
CÂBLE ET SON PROCÉDÉ DE FABRICATION

(30) Priorität: 20.11.2015 DE 102015223005
(43) Veröffentlichungstag der Anmeldung: 24.05.2017
(73) Patentinhaber: LEONI Kabel GmbH, 90402 Nürnberg (DE)
(72) Erfinder: ERNST, Christian, 91781 Weißenburg (DE); GOß, Sebastian, 91154 Roth (DE)
(74) Vertreter: FDST Patentanwälte

(56) Entgegenhaltungen:
- EP-A1- 1 081 720
- DE-A1- 19 949 167
- DE-U1- 29 724 610
- US-A- 5 042 904
- "All plastics protective sheathing arrangement", NOT KNOWN, MASON PUBLICATIONS, HAMPSHIRE, GB, Februar 1973 (1973-02), Seite 14, XP002081694, ISSN: 0374-4353

## Beschreibung

Die Erfindung betrifft ein Kabel, welches sich in einer Längsrichtung erstreckt, mit einer Kabelseele und mit einem Kabelmantel, welcher um die Kabelseele herum extrudiert ist. Weiterhin betrifft die Erfindung ein Verfahren zur Herstellung des Kabels.

Ein Kabel ist beispielsweise in der US 2014/0272115 A1 beschrieben.

Kabel unterliegen im Betrieb bestimmten Anforderungen und müssen beispielsweise bestimmte Brandschutzanforderungen erfüllen. Dazu wird ein entsprechendes Kabel typischerweise als flamm- oder brandgeschütztes Kabel ausgebildet und mit einem Flammschutzmittel versehen.

Beispielsweise wird in der US 2014/0272115 A1 ein Kabel beschrieben, auf dessen Kabelmantel eine flüssige Beschichtung aufgebracht ist, welche ein flammhemmendes Material, d.h. ein Flammschutzmaterial enthält.

Weitere Kabel sind beschrieben in der EP 1 081 720 A1 und in "All plastics protective sheathing arrangement", Autor unbekannt, Mason publications, Hampshire, GB, 1. Februar 1973 (1973-02-01), Seite 14, XP002081694, ISSN: 0374-4353.

Ausgehend hiervon ist es eine Aufgabe der Erfindung, ein verbessertes Kabel anzugeben, mit einer Zusatzfunktionalität, insbesondere einem Flammschutz. Das Kabel soll möglichst einfach zu fertigen und möglichst einfach in der Handhabung sein. Weiterhin soll ein Herstellungsverfahren für das Kabel angegeben werden.

Die Aufgabe wird erfindungsgemäß gelöst durch ein Kabel mit den Merkmalen gemäß Anspruch 1 sowie durch ein Verfahren mit den Merkmalen gemäß Anspruch 11. Vorteilhafte Ausgestaltungen, Weiterbildungen und Varianten sind Gegenstand der Unteransprüche. Dabei gelten die Ausführungen im Zusammenhang mit dem Kabel sinngemäß auch für das Verfahren und umgekehrt.

Das Kabel erstreckt sich in einer Längsrichtung und weist eine Kabelseele auf und einen Kabelmantel, welcher um die Kabelseele herum extrudiert ist. Erfindungsgemäß weist der Kabelmantel eine Anzahl von Kammern auf und innerhalb zumindest einer der Kammern ist ein vom Material des Kabelmantels verschiedenes Funktionsmaterial eingebracht.

Ein besonderer Vorteil der Erfindung besteht insbesondere darin, dass Materialien je nach Bedarf in das Kabel integriert sind, ohne diese beispielsweise außen auf dieses aufgebracht werden müssen. Derartige Materialien, auch als Funktionsmaterialien bezeichnet, sind in zumindest einer oder einigen, vorzugsweise in allen der gebildeten Kammern eingebracht. Der Kabelmantel bildet insbesondere eine Außenfläche aus und begrenzt dadurch das Kabel gegenüber dessen Umgebung. Durch geeignete Wahl des Materials für den Kabelmantel sind dann insbesondere die mechanischen Eigenschaften des Kabels optimal eingestellt. Zudem ist das Kabel einfach zu handhaben, da der Mantel vorzugsweise entsprechend robust ausgebildet ist. Auf eine flüssige Beschichtung wird insbesondere verzichtet.

Bei dem Kabel handelt es sich allgemein vorzugsweise um ein biegeflexibles elektrisches oder optisches Übertragungselement zur Daten- oder Leistungsübertragung, welches insbesondere zur losen, d.h. nicht-starren Verlegung geeignet ist. Das biegeflexible Kabel lässt sich üblicherweise schädigungsfrei entlang von engen Biegeradien verlegen, welche beispielsweise höchstens etwa dem 100-fachen des Durchmessers des Kabels entsprechen. Mögliche Biegeradien von typischen Kabeln sind somit beispielsweise geringer als 1m. Konkret ergibt sich der Biegeradius für ein bestimmtes Kabel vor Allem in Abhängigkeit der konkreten Verwendung des Kabels über eine in diesem Zusammenhang gültige Norm.

Das Kabel ist also besonders flexibel mit Zusatzfunktionen bestückbar, indem einfach in die Kammern ein für die jeweilige Zusatzfunktion geeignetes Funktionsmaterial eingebracht wird. Dabei kann es sich auch um ein Funktionselement handelt, welches beispielsweise vorgefertigt und / oder strangförmig ist.

Die Einbringung des Funktionsmaterials erfolgt gemäß einer ersten bevorzugten Variante während der Extrusion des Kabelmantels mittels eines Extrusionskopfs im Sinne eines online-Verfahrens. Alternativ wird das Funktionsmaterial erst danach eingebracht, d.h. in einem offline-Verfahren und gerade nicht über den Extrusionskopf. Beim offline-Verfahren ist es insbesondere möglich, besonders wärmeempfindliche Materialien oder Zusatzelemente erst nach der Extrusion hinzuzufügen, wenn der Kabelmantel abgekühlt ist. In einer Variante wird daher das Kabel mit unbefüllten, als Hohlkammern ausgebildeten Kammern als Halbzeug verwendet und erst später bedarfsgerecht und je nach Anforderung mit einer insbesondere beliebigen Zusatzfunktion bestückt.

Besonders bevorzugt ist jedoch ein online-Verfahren, bei welchem das Funktionsmaterial zwar über den Extrusionskopf zugeführt wird, dort jedoch von diesem thermisch getrennt über Kapillaren zunächst weitergefördert wird und erst in einem bestimmten Abstand in Förderrichtung hinter dem Extrusionskopf aus den Kapillaren austritt und in die Kammern eintritt. Die Kapillaren erstrecken sich somit ausgehend vom Extrusionskopf in Förderrichtung und jeweils innerhalb einer der Kammern. Auf diese Weise bilden die Kapillaren auch eine Stützkontur für den Kabelmantel und sind zudem für die Kammern vorteilhaft auch formgebend. Die Kapillaren sind geeigneterweise derart ausgebildet, dass das darin geförderte Funktionsmaterial gegenüber dem Extrusionskopf thermisch isoliert und vor einer Degradation oder Zersetzung geschützt ist.

Das Funktionsmaterial tritt dann aus einer jeweiligen Kapillare endseitig an einem Austrittspunkt in die jeweilige Kammer aus. Die Position des Austrittspunktes, d.h. der oben erwähnte Abstand und somit die Länge der Kapillaren ist derart gewählt, dass das Funktionsmaterial erst an einer solchen Stelle in die Kammern eintritt, an welcher der Kabelmantel hinreichend abgekühlt ist, um das Funktionsmaterial nicht nachteilig thermisch zu beeinträchtigen. Mit anderen Worten: in Förderrichtung ergibt sich ein Temperaturgefälle und die Kapillaren sind derart lang gewählt, dass das Funktionsmaterial an einer Stelle in die Kammer eingefüllt wird, an welcher eine Temperatur herrscht, durch welche das Funktionsmaterial nicht degradiert oder zerstört wird. Der Austrittspunkt liegt somit in Förderrichtung zweckmäßigerweise hinreichend weit innerhalb eines Wasserbades oder einer sonstigen Kühleinrichtung, durch welche das Kabel zum Abkühlen des Kabelmantels nach der Extrusion gefördert wird. Die Kapillaren weisen ausgehend von dem Extrusionskopf häufig eine Länge im Bereich von mehreren 10cm, z.B. von 30cm bis 100cm oder mehr z.B. auch mehrere Meter auf.

Die Kabelseele, auch als Unterbau bezeichnet, umfasst insbesondere eine Anzahl von Leitungen und/oder Adern, beispielsweise Signaladern oder Datenleitungen. Im einfachsten Fall handelt es sich bei der Kabelseele um einen einfachen, nicht isolierten Leiter, z.B. eine Litze. In einer Variante umfasst die Kabelseele eine optische Übertragungsleitung, z.B. eine Glasfaser, und/oder eine Zugentlastung oder Ähnliches. In einer weiteren Variante umfasst die Kabelseele eine Schirmung, z.B. ein Geflecht oder eine kaschierte Folie oder ist insgesamt von einer solchen Schirmung umgeben oder umhüllt. Grundsätzlich eignet sich als Kabelseele demnach jede Anordnung von Kabeln, Leitungen und/oder Adern, mit oder ohne Funktionselementen sowie mit oder ohne Mantel. Insbesondere ist auch eine Variante denkbar, bei welcher die Kabelseele eine Anzahl von Schläuchen umfasst, zur Führung von Betriebs- oder Arbeitsmedien, oder dass die Kabelseele selbst so ein Schlauch ist.

Der Kabelmantel wird direkt auf die Kabelseele aufgebracht, d.h. die Kabelseele wird als Halbzeug einem Extrusionskopf zugeführt, über welchen das Material des Kabelmantels auf die Kabelseele aufextrudiert wird. Dabei werden gleichzeitig die Kammern ausgebildet. Hierzu ist der Extrusionskopf entsprechend geeignet ausgebildet.

In einer bevorzugten Variante wird zumindest eine der Kammern, vorzugsweise werden alle Kammern schon während der Extrusion befüllt, indem dem Extrusionskopf das entsprechende Material oder ein Funktionselement zugeführt wird.

Aufgrund der verwendeten Kapillaren ist zunächst eine hinreichende Stützwirkung bis zur Abkühlung des Kabelmantels gewährleistet. Insbesondere wenn keine Kapillaren verwendet werden, wird das Kabel nach der Extrusion zweckmäßigerweise in eine Kalibriereinheit gefördert, um die Außenkontur des Kabels, insbesondere ein kreisförmiger Querschnitt mit definiertem Durchmesser, zu überwachen und einzustellen. Üblicherweise wird der Kabelmantel dabei in der Kalibriereinheit angesaugt, um ein Kollabieren des Kabelmantels vor dem Abkühlen und Aushärten zu vermeiden. Zugleich erfolgt insbesondere eine Kontrolle des Außendurchmessers des Kabels. Die Verwendung einer Kalibriereinheit ist auch bei der bevorzugten Herstellungsmethode mit nachgelagerter Befüllung der Kammern über Kapillaren möglich, insbesondere zur Gewährleistung einer definierten Außenkontur. Zweckmäßigerweise wird hierbei jedoch auf eine Kalibriereinheit verzichtet.

In einer möglichen Variante, beispielsweise im Rahmen des oben erwähnten offline-Verfahrens, werden unbefüllte Hohlkammern als die Kammern ausgebildet, indem dem Extrusionskopf Luft oder allgemein ein Stützmedium zugeführt wird, damit die Kammern nicht kollabieren. Alternativ oder zusätzlich ist auch die Verwendung einer Kalibriereinheit sinnvoll. Ein jeweiliges Material wird dann später in die Kammern eingebracht.

Insgesamt ist der Kabelmantel insbesondere also nach Art eines (Hohl-)Profils ausgebildet, mit einer Anzahl von (Profil-) Kammern, welche sich in Längsrichtung insbesondere unterbrechungsfrei erstrecken und Raum zur Integration weiterer Funktionen bieten. Der Kabelmantel ist vorzugsweise einstückig oder in einem Stück gefertigt, d.h. insbesondere zusammenhängend und aus lediglich einem Material, insbesondere lediglich einem Werkstoff, hergestellt und nicht etwa aus separat gefertigten Teilen zusammengesetzt.

Grundsätzlich sind mittels des Verfahrens jegliche Querschnittsgeometrien und Anordnungen der Kabelseele relativ zum Kabelmantel möglich. In einer besonders einfachen Ausgestaltung ist die Kabelseele allerdings im Querschnitt quer zur Längsrichtung zentral angeordnet und um diese herum ist eine Anzahl an Öffnungen in den Kabelmantel eingebracht, über welche die Kammern zugänglich sind.

In einer bevorzugten Variante ist der Kabelmantel zudem nach außen hin lochfrei ausgeführt, d.h. weist in radialer Richtung keine Öffnungen auf, sodass die Kammern dann lediglich endseitig in Längsrichtung zugänglich und ansonsten abgeschlossen sind. Weiterhin ist der Kabelmantel in einer besonders einfachen Variante vorzugsweise rotationssymmetrisch ausgebildet, zumindest insofern als dass der Kabelmantel insbesondere rund ist und die Kammern gleichartig ausgebildet sind.

Eine jeweilige Kammer weist beispielsweise eine Querschnittfläche im Bereich von 0,1 bis 100 mm² auf oder sogar mehr, je nach konkreter Ausgestaltung und konkretem Einsatzzweck des Kabels. Grundsätzlich ist bei den Kammern jegliche Querschnittsgeometrie denkbar, beispielsweise kreisrund, elliptisch oder eckig. Aufgrund der Kammern sind bei dem Kabelmantel dann insbesondere ein innerer und ein äußerer Mantelabschnitt ausgebildet. Zumindest der äußere Mantelabschnitt ist durchgängig ausgeführt, d.h. die Kammern erstrecken sich in radialer Richtung nicht bis in äußeren Mantelabschnitt sondern sind vielmehr in einem dazwischenliegenden, mittleren Mantelabschnitt angeordnet und durch den äußeren Mantelabschnitt begrenzt. Der äußere Mantelabschnitt bildet insbesondere eine Außenfläche des gesamten Kabels. Der innere Mantelabschnitt liegt insbesondere an der Kabelseele an. In einer ersten Variante ist der innere Mantelabschnitt ähnlich dem äußeren Mantelabschnitt durchgängig ausgeführt. In einer zweiten Variante ist dagegen der innere Mantelabschnitt unterbrochen, sodass die Kammern durch diesen hindurch und bis an die Kabelseele heran reichen. Die beiden Mantelabschnitt sind insbesondere über Stege miteinander verbunden, welche sich im Wesentlichen in radialer Richtung erstrecken und die Kammern voneinander abgrenzen. In einer Variante ist kein innerer Mantelabschnitt vorhanden, sodass die Kammern und die Stege direkt an der Kabelseele ansetzen und nach innen von dieser begrenzt sind. Der innere und der äußere Mantelabschnitt weisen jeweils eine Wandstärke im Bereich von beispielsweise 0,05 bis 20 mm auf. Die Stege weisen jeweils eine Wandstärke beispielsweise im Bereich von 0,01 bis 10 mm auf. Die Wandstärke der Stege entspricht insbesondere auch einem Abstand der Kammern zueinander, d.h. einem Kammerabstand.

In einer besonders bevorzugten Ausgestaltung ist innerhalb zumindest einer der Kammern ein insbesondere festes Flammschutzmittel angeordnet. Mit anderen Worten: die Kammer ist mit einem Flammschutzmittel vollständig oder zumindest teilweise befüllt und insbesondere nicht lediglich beschichtet. Vorzugsweise ist das Flammschutzmittel in allen Kammern angeordnet. Dadurch ist auf konstruktiv einfache Weise ein flammbeständiges oder flammgeschütztes Kabel ausgebildet, bei welchem einerseits die Kabelseele optimal von Flammschutzmittel umgeben ist und andererseits nach außen hin der Gesamtaufbau durch den Kabelmantel insbesondere mechanisch geschützt ist. Unter "fest" wird dabei insbesondere verstanden, dass das Flammschutzmittel zumindest eine solche Viskosität aufweist, dass das Flammschutzmittel beim Durchtrennen des Kabels nicht herausläuft. Die hierzu erforderliche Viskosität oder Festigkeit ist vor allem von der Querschnittsfläche einer jeweiligen Kammer abhängig.

Das Flammschutzmittel basiert regelmäßig auf einem pulverförmigen Feststoff als Ausgangsstoff oder Flammschutzstoff, welcher zur besseren Verarbeitbarkeit, insbesondere Pumpbarkeit, zweckmäßigerweise mit einem flüssigen oder gelartigen Prozessstoff vermischt ist. Als Ausgangsstoff für das Flammschutzmittel eignet sich z.B. ATH, d.h. Aluminiumhydroxid, welches besonders kostengünstig ist. Grundsätzlich sind aber auch z.B. AOH, d.h. Aluminiumoxidhydroxid, oder MDH, d.h. Magnesiumhydroxid geeignet. Vorteilhafterweise ist der Prozessstoff selbst schon zumindest brandhemmend. Besonders geeignet ist in diesem Zusammenhang Silikonöl als Prozessstoff. Der jeweilige Ausgangsstoff wird dann in zur Verarbeitung geeigneter Weise mit dem Prozessstoff vermischt.

Besonders vorteilhaft ist die Verwendung eines vernetzbaren Prozessstoffs, welcher anfänglich zu einem flüssigen oder gelartigen Flammschutzmittel führt, welches nach der Herstellung des Kabels oder zumindest nach dem Befüllen der Kammern vernetzt und dadurch verfestigt wird. Der Prozessstoff liegt im fertigen Kabel vernetzt vor und dient dann sozusagen als Matrix für den Flammschutzstoff. Dadurch ist einerseits während der Herstellung eine einfache Verarbeitbarkeit des Flammschutzmittels realisiert, insbesondere ist dieses durch die Kapillaren pumpbar, und andererseits am fertigen Kabel ein Auslaufen des Flammschutzmittels bei der Konfektionierung vorteilhaft verhindert. Auch hier eignet sich Silikonöl, welches vernetzbar ist, wodurch insbesondere dessen Viskosität eingestellt wird. Der Prozessstoff dient also insgesamt zur Ausbildung des festen Flammschutzmittels, wobei für den Begriff "fest" auch hier das oben bereits Gesagte gilt.

Insbesondere die vorgenannte Möglichkeit, das Flammschutzmittel zu einem späteren Zeitpunkt zu integrieren, vergrößert die Materialauswahl bei der Herstellung des Kabelmantels erheblich. Dem liegt der Gedanke zugrunde, dass das Flammschutzmittel, insbesondere der Flammschutzstoff, eine Zersetzungstemperatur aufweist, welche herkömmlicherweise größer sein muss, als eine Verarbeitungstemperatur des Kabelmantels, genauer gesagt eines Materials zur Herstellung des Kabelmantels. Durch die Extrusion bei einer bestimmten Verarbeitungstemperatur ist jedoch die Einbringung oder Integration eines Flammschutzmittels während der Herstellung stark eingeschränkt, nämlich insbesondere auf solche Flammschutzmittel, welche bei der entsprechenden Verarbeitungstemperatur noch beständig sind. Dies widerspricht jedoch häufig der Tatsache, dass eine Zersetzung des Flammschutzmittels ab einer bestimmten Temperatur gewollt ist, um durch die dann einsetzende Reaktion eine flammenhemmende oder -abwehrende Wirkung zu erzielen. Durch das erst spätere Einbringen des Flammschutzmittels in die Kammern ist es dann möglich, auch Flammschutzmittel zu verwenden, welche bereits bei niedrigen Temperaturen reagieren, und diese zugleich mit einem optimalen Material für den Kabelmantel zu kombinieren. Daher ist der Kabelmantel in einer bevorzugten Ausgestaltung aus einem Material gefertigt, welches eine Verarbeitungstemperatur aufweist, die größer ist als die Zersetzungstemperatur. Unter Verarbeitungstemperatur wird hier insbesondere eine minimale Verarbeitungstemperatur verstanden, welche notwendig ist, um das Material zur Extrusion hinreichend zu verflüssigen.

Eine besonders geeignete Materialkombination ist Polypropylen, kurz PP, als Material für den Kabelmantel und ATH als Flammschutzmittel oder als Basis für dieses. ATH weist eine Zersetzungstemperatur von etwa 190°C auf, PP wird hingegen bei Temperaturen üblicherweise weit über 190°C verarbeitet. PP ist besonders kostengünstig und robust, ebenso ist ATH besonders kostengünstig und somit entsprechend auch das gesamte Kabel. Eine andere geeignete Materialkombination ist Polyamid, kurz PA, als Material für den Kabelmantel und MHO als Flammschutzmittel oder als Basis für dieses.

Die Verwendung von kostengünstigem ATH wird wie bereits erwähnt durch das spezielle Kabel ermöglicht, bei welchem die Integration des Flammschutzmittels zu einem späteren Zeitpunkt möglich und von der Extrusion des Kabelmantels entkoppelt ist. Bei dem hier vorgestellten Kabel wird dann zweckmäßigerweise der Kabelmantel nach der Extrusion zunächst abgekühlt und danach zumindest eine der Kammern, vorzugsweise werden alle Kammern mit dem Flammschutzmittel, speziell bevorzugt mit ATH befüllt, welches mit einem Prozessstoff vermischt ist, vorzugsweise Silikonöl, sodass im fertigen Kabel das Flammschutzmittel ATH aufweist, welches in den Prozessstoff eingebettet ist.

Die Kammern sind zweckmäßigerweise in einer Umfangsrichtung um die Kabelseele herum gleichmäßig verteilt angeordnet. Dadurch ergibt sich insbesondere in Kombination mit einem Flammschutzmittel ein besonders homogener Flammschutz. Beispielsweise sind die Kammern entlang eines gedachten Kreises um die Kabelseele herum angeordnet und dabei in Umfangsrichtung gleichmäßig voneinander beabstandet. Beispielsweise sind sechs Kammern angeordnet, wobei eine jeweilige Kammer bezüglich deren benachbarten Kammern um 60° um die Längsachse gedreht angeordnet ist.

Geeigneterweise sind die Kammern in einem Querschnitt quer zur Längsrichtung ringsegmentförmig ausgebildet. In dieser Ausgestaltung ergibt sich ein besonders großes Gesamtvolumen der Kammern, da der Umfang um die Kabelseele herum weitestgehend ausgenutzt wird. Lediglich die Stege zwischen den Mantelabschnitten verbleiben als insbesondere dünne Wände zwischen jeweils zwei benachbarten Kammern. Besonders in Kombination mit einem Flammschutzmittel ist dann ein maximaler Flammschutz gewährleistet.

Das Kabel weist typischerweise zwei Enden auf. Eine jeweilige der Kammern erstreckt sich dann vorteilhafterweise durchgehen von einem der Enden zu dem anderen der Enden, sodass also eine in Längsrichtung durchgängige Kammer ausgebildet ist. Eine solche Kammer ist besonders einfach zu bestücken oder zu befüllen, da lediglich endseitig des Kabels ein Material oder ein Funktionselement eingebracht werden muss und dann bis zum andere Ende durchgeschoben werden kann. Ein Kabel mit durchgängigen Kammern eignet sich insbesondere auch als Endlosware, welche später nach Bedarf abgelängt und konfektioniert wird. Grundsätzlich sind jedoch auch Varianten mit in Längsrichtung getrennten Kammern denkbar. Diese werden dann zweckmäßigerweise bereits bei der Extrusion des Kabelmantels befüllt.

Das Kabel mit Kammern eignet sich insbesondere auch zur Integration von anderen Zusatzfunktionen als dem oben erwähnten Flammschutz. Dabei ist eine Vielzahl an Varianten denkbar, bei welchen entweder alle Kammern gleichartig bestückt sind oder alternativ mit unterschiedlichen Materialien oder Funktionselementen versehen sind.

In einer ersten Variante ist innerhalb zumindest einer der Kammern ein physikalisch aktivierbares Material, insbesondere Stoff, als Funktionsmaterial angeordnet. Unter "physikalisch aktivierbar" wird dabei verstanden, dass das Material durch einen äußeren Einfluss aktiviert wird und dann eine Umwandlung erfährt, aufgrund derer sich zumindest eine physikalische Eigenschaft des Materials ändert. Äußere Einflüsse sind z.B. Stöße, Dehnungen, Biegungen, bestimmte Temperaturen, Feuchtigkeit, Ultraschall oder elektromagnetische Strahlung und allgemein eine Aktivierungsenergie. Physikalische Eigenschaften sind z.B. Biegesteifigkeit, Aggregatzustand, Farbe, Volumen, Transparenz oder dergleichen.

In einer zweiten Variante ist innerhalb zumindest einer der Kammern ein schockabsorbierendes Fluid als Funktionsmaterial angeordnet. Dadurch ist ein mechanisch besonders robustes Kabel ausgebildet.

In einer dritten Variante ist innerhalb zumindest einer der Kammern ein Phasenwechselmaterial angeordnet. Ein Phasenwechselmaterial zeichnet sich insbesondere dadurch aus, dass diesem für einen Phasenwechsel besonders viel

Energie zugeführt bzw. entzogen werden muss. Ein solches Phasenwechselmaterial dient daher beispielsweise als Latentwärmespeicher oder Wärmeabsorber. Ein entsprechendes Kabel wird beispielsweise an potentiell warmen Stellen z.B. in einem Fahrzeug verbaut, um die Kabelseele durch Wärmeaufnahme vor einer zu starken Erwärmung zu schützen. Bei einer nachfolgenden Wartung kann das Phasenwechselmaterial dann insbesondere wieder regeneriert werden. Auch im Sinne eines Flammschutzes ist ein Phasenwechselmaterial geeignet, um zumindest über einen bestimmten Zeitraum die Kabelseele vor einer Erwärmung zu schützen.

Zur Ausbildung eines selbstheilenden Kabels ist in einer vierten Variante innerhalb zumindest einer der Kammern ein insbesondere flüssiges Reparaturmaterial angeordnet. Das Reparaturmaterial zeichnet sich dadurch aus, dass dieses bei einer Beschädigung des Kabelmantels beispielsweise aus der Kammer austritt und die Beschädigung verdeckt oder ausfüllt. Dazu reagiert das Reparaturmaterial z.B. mit Luft oder mit Feuchtigkeit in der Luft und härtet dann beispielsweise aus. Denkbar ist auch, dass das Reparaturmaterial automatisch in Risse im Kabelmantel eindringt und diese wieder verschließt.

Grundsätzlich ist auch die Verwendung von Luft oder generell einem einfachen Stütz- oder Füllgas anstelle des Funktionsmaterials denkbar, sodass das Kabel insgesamt besonders leicht ist. Im Sinne der vorliegenden Anmeldung ist Luft aber nicht vom Begriff des Funktionsmaterials umfasst. Vielmehr bezeichnet der Begriff Funktionsmaterial ein von Luft verschiedenes Material und insbesondere einen flüssigen, gelartigen oder festen Stoff oder Werkstoff.

Vorliegend ist gemäß der Erfindung das Funktionsmaterial als Mehrkomponentensystem ausgebildet, mit zumindest zwei unterschiedlichen Materialien, insbesondere Stoffen oder Medien, die in unterschiedlichen Kammern angeordnet sind, wobei die Materialien bei Kontakt miteinander reagieren. Als Ergebnis der Reaktion wird eine Füllung gebildet, welche bezüglich der Materialien abweichende Eigenschaften aufweist, beispielsweise ein vergrößertes Volumen, eine erhöhte Steifigkeit oder Festigkeit oder eine andere Farbe. Denkbar ist auch eine Erzeugung oder Absorption von Energie infolge der Reaktion.

Allgemein sind bei einem Mehrkomponentensystem die Kammern also mit zumindest zwei unterschiedlichen Materialien befüllt, welche bei Kontakt miteinander insbesondere chemisch reagieren. Dadurch lässt sich vorteilhaft beispielsweise ein selbstexpandierendes Kabel realisieren, dessen Kabelmantel sich nach dem Auslösen der Reaktion, z.B. durch Zerdrücken, Anstechen oder Anschneiden der Kammern, automatisch an einen vorgegebenen Durchmesser anpasst. Beispielsweise wird das Kabel durch eine Durchführung einer Blende oder Wandung geführt und dann die Reaktion gestartet, sodass sich der Durchmesser des Kabelmantels durch die Expansion der Füllung an den Innendurchmesser der Durchführung anpasst. In Diesem Sinne ist auch ein selbstheilendes Kabel mit einem Mehr-Komponenten-Materialsystem realisiert, wobei die Füllung dann eine beschädigte Stelle des Kabelmantels auffüllt und/oder überdeckt.

In einer Variante ist eine abschnittsweise Versteifung ist mittels des Mehr-Komponenten-Systems realisiert. Beispielsweise wird hierbei dann durch lokales Starten der Reaktion auf einem begrenzten Abschnitt durch die einsetzende Reaktion eine abschnittsweise Versteifung ausgebildet und die Biegeflexibilität des Kabels gezielt reduziert.

In einer weiteren geeigneten Variante des Kabels ist zumindest eine der Kammern zur Förderung eines Betriebsmediums ausgebildet, d.h. im Betrieb des Kabels wird durch eine der Kammern ein Betriebs- oder Arbeitsmedium gefördert, z.B. Wasser, Öl oder Luft. Dadurch ist der Einsatzbereich des Kabels deutlich erweitert. Geeigneterweise ist hierzu die Kammer endseitig mit geeigneten Anschlusselementen versehen.

Wie bereits erwähnt ist auch eine Kombination mehrerer der oben genannte Varianten und allgemein mehrerer verschiedener Materialien und/oder Funktionselemente möglich.

Denkbar ist auch eine alternative Ausgestaltung des Kabels, bei welcher die Kabelseele nicht im Zentrum angeordnet ist, sondern in einer der Kammern. Mit anderen Worten: der Kabelmantel wird derart auf die Seele aufextrudiert, dass der Kabelmantel eine Zentralkammer aufweist, die von einer Anzahl an Kammern umringt ist, wobei in einer der Kammern die Kabelseele angeordnet ist. Diese Ausgestaltung eignet sich besonders für ein Kabel zur Förderung eines Betriebs- oder Arbeitsmediums, welches dann vorzugsweise in der Zentralkammer geführt wird, da diese deutlich einfacher mit einem Anschlusselement versehbar ist, welches daher geeigneterweise auch angeschlossen ist.

Nachfolgend werden Ausführungsbeispiele der Erfindung anhand einer Zeichnung näher erläutert. Darin zeigen jeweils schematisch:
- Fig. 1: die Extrusion eines Kabelmantels für ein Kabel,
- Fig. 2a - 2c: jeweils eine Variante des Kabels in einer Querschnittansicht,
- Fig. 3a, 3b: ein Kabel mit expandierender bzw. expandierter Füllung, und
- Fig. 3c: das Kabel aus Fig. 3a in einer Querschnittansicht.

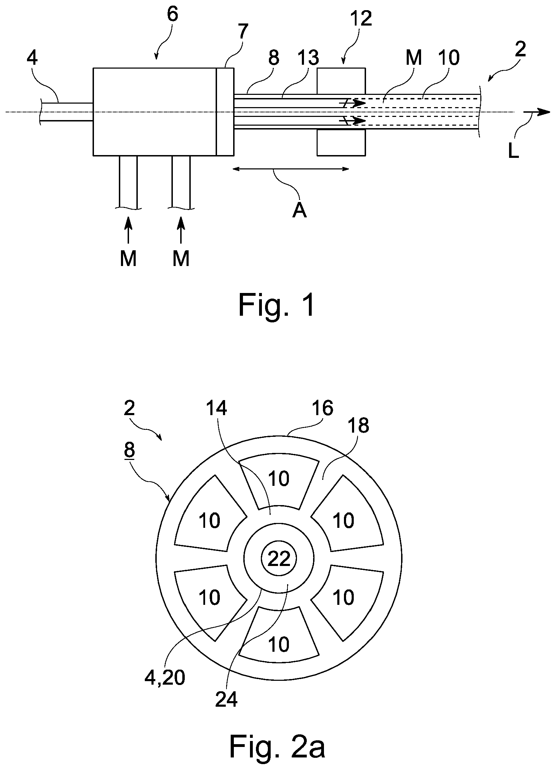

In Fig. 1 ist stark schematisiert ein bevorzugtes Herstellungsverfahren für ein Kabel 2 gezeigt. Das Kabel 2 weist eine Kabelseele 4 auf, welche als Halbzeug einer Extrusionsanlage 6 zugeführt wird und dabei auch einem Extrusionskopf 7. Mittels diesem wird auf die Kabelseele 4 ein Kabelmantel 8 aufextrudiert, beispielsweise aus Polypropylen. Drei Ausführungsbeispiele für das Kabel 2 sind in den Fig. 2a bis 2c jeweils in einer Querschnittansicht dargestellt. Dort ist zunächst erkennbar, dass der Kabelmantel 8 eine Anzahl von Kammern 10 aufweist, welche sich entlang des Kabels 2 in einer Längsrichtung L erstrecken und hier zudem durchgängig ausgeführt sind. Nach dem Extrusionskopf 7 wird das Kabel 2 in ein Wasserbad 12 gefördert, zum Abkühlen. In einer nicht gezeigten Variante wird das Kabel 2 alternativ oder zusätzlich durch eine Kalibriereinheit gefördert, welche gewährleistet, dass beim anschließenden Abkühlen die Kammern 10 nicht kollabieren und dass der Kabelmantel 8 die vorgesehene Form behält.

Die Kammern 10 werden in Fig. 1 kurz nach der Extrusion des Kabelmantels 8 mit einem Funktionsmaterial M befüllt. Dieses wird direkt dem Extrusionskopf 7 zugeführt. Der Extrusionskopf 7 weist zudem eine Anzahl an Kapillaren 13 auf, welche sich in Förderrichtung, d.h. in Längsrichtung L erstrecken und als Stützkontur für die Kammern 10 dienen. Zugleich wirken die Kapillaren 13 formgebend. Das Funktionsmaterial M wird dann zunächst durch die Kapillaren 13 geführt und erst in einem Abstand A in Förderrichtung hinter dem Extrusionskopf 7 aus den Kapillaren 13 in die Kammern 10 eingeleitet. An dieser Stelle ist der Kabelmantel 8 hinreichend abgekühlt, sodass das Funktionsmaterial M nicht Gefahr läuft zersetzt zu werden.

Alternativ wird zunächst Luft oder ein anderes Stützmedium verwendet und anschließend, insbesondere nach dem Abkühlen, werden die Kammern 10 mit einem Funktionsmaterial M befüllt. Bei dieser nicht gezeigten Variante ist daher als Zwischenprodukt ein mit Hohlkammern ausgebildetes Kabel 2 gebildet. Dieses kann grundsätzlich auch als Endprodukt eingesetzt werden. In einer nicht gezeigten Variante werden die Kammern 10 alternativ oder zusätzlich mit einem vorgefertigten Funktionselement bestückt.

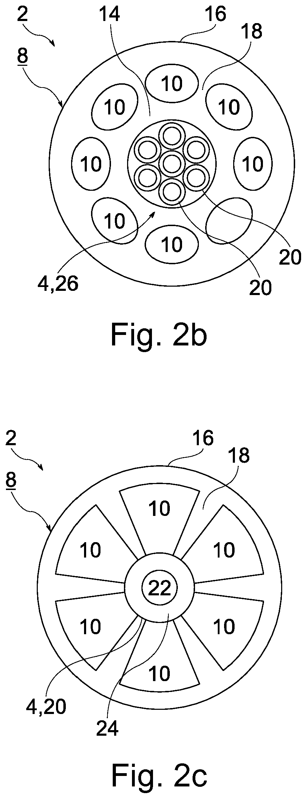

Bei der in Fig. 2a gezeigten Variante weist das Kabel mehrere ringsegmentförmig ausgebildete Kammern 10 auf, welche gleichmäßig in einer Umfangsrichtung um die Kabelseele 4 herum im Kabelmantel 8 angeordnet sind. Zur Kabelseele 4 hin sind die Kammern 10 in den Fig. 2a und 2b durch einen inneren Mantelabschnitt 14 abgegrenzt, nach außen hin durch einen äußeren Mantelabschnitt 16 und gegeneinander durch Stege 18. Im Ausführungsbeispiel der Fig. 2c fehlt jedoch ein innerer Mantelabschnitt 14, sodass die Stege 18 und die Kammern 10 bis an die Kabelseele 4 heranreichen.

Vorzugsweise sind die Kammern 10 mit einem Flammschutzmittel M befüllt. Grundsätzlich ergeben sich jedoch zahlreiche Möglichkeiten bei der Auswahl der Bestückung oder Befüllung der Kammern 10. Alternativ oder zusätzlich ist das Material M z.B. ein schockabsorbierendes Fluid, ein lichtleitendes Material, beispielsweise als Funktionselement in Form einer optischen Faser, ein Phasenwechselmaterial oder ein Reparaturmaterial.

Die Kabelseele 4 ist in Fig. 2a eine einfache Ader 20, mit einem Leiter 22, der von einer Isolierung 24 umgeben ist

Das Kabel 2 in der in Fig. 2b gezeigten Variante weist ebenfalls mehrere gleichmäßig verteilte Kammern10 auf, welche hier jedoch elliptisch geformt sind. Die Kabelseele 4 ist hier eine Leitung 26 mit mehreren Adern 20.

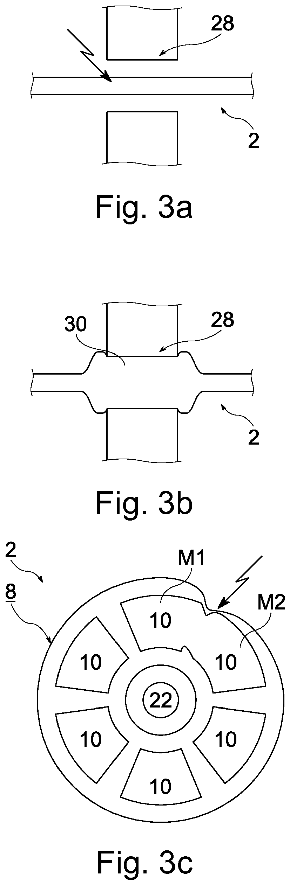

In den Fig. 3a und 3b ist in einer Seitenansicht eine Variante des Kabels 2 gezeigt, bei welchem in den Kammern 10 zwei unterschiedliche Materialien M1, M2 angeordnet sind, welche bei einer Vermischung eine expandierende Füllung bilden. In Fig. 3a ist das Kabel 2 zunächst mit Spiel durch eine Durchführung 28 geführt. Der Kabelmantel 8 wird nun wie dargestellt beispielsweise angeschnitten oder angestochen oder wie in der Querschnittansicht der Fig. 3c gezeigt angedrückt, sodass der Steg 18 zwischen zwei Kammern 10 zerstört wird und sich die zwei Materialien M1, M2 in den benachbarten Kammern 10 vermischen, chemisch reagieren und schließlich die expandierende Füllung bilden. Dies führt nun dazu, dass am Kabel 2 eine Verdickung 30 nach Art eines Kropfs ausgebildet wird, wie in Fig. 3b gezeigt. Die Durchführung 28 ist dann optimal verschlossen und das Kabel 2 sitzt optimal abgedichtet in der Durchführung 28 ein.

## Patentansprüche

1. Kabel (2), welches sich in einer Längsrichtung (L) erstreckt, mit einer Kabelseele (4) und mit einem Kabelmantel (8), welcher um die Kabelseele (4) herum extrudiert ist, wobei
- der Kabelmantel (8) eine Anzahl von Kammern (10) aufweist,
- innerhalb zumindest einer der Kammern (10) ein vom Material des Kabelmantels (8) verschiedenes Funktionsmaterial (M) eingebracht ist, **dadurch gekennzeichnet dass**
- das Funktionsmaterial (M) als Mehrkomponentensystem ausgebildet ist, mit zumindest zwei unterschiedlichen Materialien (M1, M2), die in unterschiedlichen Kammern (10) angeordnet sind, wobei die zumindest zwei unterschiedlichen Materialien (M1, M2) bei Kontakt miteinander reagieren.

2. Kabel nach einem der vorhergehenden Ansprüche,
**dadurch gekennzeichnet,**
**dass** innerhalb zumindest einer der Kammern (10) ein Flammschutzmittel angeordnet ist.

3. Kabel nach dem vorhergehenden Anspruch,
**dadurch gekennzeichnet,**
**dass** das Flammschutzmittel aus einem pulverförmigen Feststoff und aus einem Prozessstoff zusammengesetzt ist.

4. Kabel nach dem vorhergehenden Anspruch,
**dadurch gekennzeichnet,**
**dass** der Prozessstoff vernetzt ist, zur Ausbildung des festen Flammschutzmittels.

5. Kabel nach einem der Ansprüche 2 bis 4,
**dadurch gekennzeichnet,**
**dass** das Flammschutzmittel eine Zersetzungstemperatur aufweist und dass der Kabelmantel (8) aus einem Material gefertigt ist, welches eine Verarbeitungstemperatur aufweist, die größer ist als die Zersetzungstemperatur.

6. Kabel nach einem der Ansprüche 2 bis 5,
**dadurch gekennzeichnet,**
**dass** das Flammschutzmittel ATH aufweist, welches in einen Prozessstoff eingebettet ist, und dass der Kabelmantel (8) aus Polypropylen gefertigt ist.

7. Kabel nach einem der vorhergehenden Ansprüche,
**dadurch gekennzeichnet,**
**dass** die Kammern (10) in einer Umfangsrichtung um die Kabelseele (4) herum gleichmäßig verteilt angeordnet sind und / oder dass die Kammern (10) in einem Querschnitt quer zur Längsrichtung (L) ringsegmentförmig ausgebildet sind.

8. Kabel nach einem der vorhergehenden Ansprüche,
**dadurch gekennzeichnet,**
**dass** dieses zwei Enden aufweist und eine jeweilige der Kammern (10) sich durchgehen von einem der Enden zu dem anderen der Enden erstreckt.

9. Kabel nach einem der vorhergehenden Ansprüche,
**dadurch gekennzeichnet,**
**dass** innerhalb zumindest einer der Kammern (10)
- ein physikalisch aktivierbares Material als Funktionsmaterial oder
- ein schockabsorbierendes Fluid oder
- ein Phasenwechselmaterial oder
- ein Reparaturmaterial angeordnet ist.

10. Kabel nach einem der vorhergehenden Ansprüche,
**dadurch gekennzeichnet,**
**dass** zumindest einer der Kammern (10) zur Förderung eines Betriebsmediums ausgebildet ist.

11. Verfahren zur Herstellung eines Kabels (2), wobei auf eine Kabelseele (4) ein Kabelmantel (8) aufextrudiert wird, in welchen eine Anzahl von Kammern (10) Kammern eingebracht werden und zumindest ein Teil der Kammern (10) bei oder nach der Extrusion mit einem Funktionsmaterial (M) gefüllt werden, wobei das Funktions-material (M) als Mehrkomponentensystem ausgebildet ist, mit zumindest zwei unterschiedlichen Materialien (M1, M2), die in unterschiedlichen Kammern (10) angeordnet sind, wobei die zumindest zwei unterschiedlichen Materialien (M1, M2) bei Kontakt miteinander reagieren.

12. Verfahren nach dem vorhergehenden Anspruch,
**dadurch gekennzeichnet,**
**dass** das Kabel (2) nach der Extrusion des Kabelmantels (8) abgekühlt wird und dabei zumindest eine der Kammern (10) mit einem Flammschutzmittel als Funktionsmaterial (M) befüllt werden.

13. Verfahren nach einem der beiden vorhergehenden Ansprüche,
**dadurch gekennzeichnet,**
**dass** das Flammschutzmittel nach dem Befüllen der Kammern (10) vernetzt wird.

14. Verfahren nach einem der Ansprüche 11 bis 13,
**dadurch gekennzeichnet,**
**dass** des Kabelmantel (8) aus einem Material gefertigt wird, welches bei einer Verarbeitungstemperatur verarbeitet wird, und dass das Flammschutzmittel eine Zersetzungstemperatur aufweist, welche geringer ist als die Verarbeitungstemperatur.

## Claims

1. Cable (2), which extends in a longitudinal direction, comprising a cable core (4) and a cable jacket (8), which is extruded around the cable core (4), wherein
- the cable jacket (8) has a number of chambers (10),
- a functional material (M) that is different from the material of the cable jacket (8) is incorporated within at least one of the chambers (10),
**characterized in that**
- the functional material (M) is formed as a multicomponent system comprising at least two different materials (M1, M2), which are arranged in different chambers (10), wherein the at least two different materials (M1, M2) react when they come into contact with one another.

2. Cable according to one of the preceding claims, **characterized in that** a flame retardant is arranged within at least one of the chambers (10).

3. Cable according to the preceding claims, **characterized in that** the flame retardant is composed of a powdered solid and a process material.

4. Cable according to the preceding claims, **characterized in that** the process material is crosslinked to form the solid flame retardant.

5. Cable according to one of Claims 2 to 4, **characterized in that** the flame retardant has a decomposition temperature and **in that** the cable jacket (8) is produced from a material which has a processing temperature that is greater than the decomposition temperature.

6. Cable according to one of Claims 2 to 5, **characterized in that** the flame retardant comprises ATH, which is embedded in a process material, and **in that** the cable jacket (8) is produced from polypropylene.

7. Cable according to one of the preceding claims, **characterized in that** the chambers (10) are arranged uniformly distributed in a circumferential direction around the cable core (4) and/or **in that** the chambers (10) are formed as ring segments in a cross section transverse to the longitudinal direction (L).

8. Cable according to one of the preceding claims, **characterized in that** it has two ends and a respective one of the chambers (10) extends continuously from one of the ends to the other of the ends.

9. Cable according to one of the preceding claims, **characterized in that**
- a physically activatable material as a functional material or
- a shock-absorbing fluid or
- a phase-change material or
- a repair material
is arranged within at least one of the chambers (10).

10. Cable according to one of the preceding claims, **characterized in that** at least one of the chambers (10) is designed for transporting an operating medium.

11. Method for producing a cable (2), wherein a cable jacket (8) in which a number of chambers (10) are incorporated is extruded onto a cable core (4) and at least some of the chambers (10) are filled with a functional material (M) during or after the extrusion, wherein the functional material (M) is formed as a multicomponent system, comprising at least two different materials (M1, M2), which are arranged in different chambers (10), wherein the at least two different materials (M1, M2) react when they come into contact with one another.

12. Method according to the preceding claim, **characterized in that**, after the extrusion of the cable jacket (8), the cable (2) is cooled down and at least one of the chambers (10) is thereby filled with a flame retardant as functional material (M).

13. Method according to one of the two preceding claims, **characterized in that** the flame retardant is crosslinked after filling the chambers (10).

14. Method according to one of Claims 11 to 13, **characterized in that** the cable jacket (8) is produced from a material that is processed at a processing temperature, and **in that** the flame retardant has a decomposition temperature that is lower than the processing temperature.

## Revendications

1. Câble (2) qui s'étend dans une direction longitudinale (L), comprenant une âme de câble (4) et comprenant une gaine de câble (8) qui est extrudée autour de l'âme de câble (4),
- la gaine de câble (8) possédant une pluralité de chambres (10),
- un matériau fonctionnel (M) différent du matériau de la gaine de câble (8) étant incorporé à l'intérieur d'au moins l'une des chambres (10),
**caractérisé en ce que**
- le matériau fonctionnel (M) est réalisé sous la forme d'un système à composantes multiples comprenant au moins deux matériaux (M1, M2) différents qui sont disposés dans des chambres (10) différentes, les au moins deux matériaux (M1, M2) différents réagissant entre eux en cas de contact.

2. Câble selon l'une des revendications précédentes, **caractérisé en ce qu'**un retardateur de flamme est disposé à l'intérieur d'au moins l'une des chambres (10).

3. Câble selon la revendication précédente, **caractérisé en ce que** le retardateur de flamme est composé d'une substance solide poudreuse et d'une substance de procédé.

4. Câble selon la revendication précédente, **caractérisé en ce que** la substance de procédé est réticulée en vue de former le retardateur de flamme solide.

5. Câble selon l'une des revendications 2 à 4, **caractérisé en ce que** le retardateur de flamme présente une température de décomposition et **en ce que** la gaine de câble (8) est fabriquée dans un matériau qui présente une température de mise en oeuvre supérieure à la température de décomposition.

6. Câble selon l'une des revendications 2 à 5, **caractérisé en ce que** le retardateur de flamme possède de l'ATH, lequel est enrobé dans une substance de procédé, et **en ce que** la gaine de câble (8) est fabriquée en polypropylène.

7. Câble selon l'une des revendications précédentes, **caractérisé en ce que** les chambres (10) sont disposées distribuées de manière régulière dans un sens circonférentiel autour de l'âme de câble (4) et/ou **en ce que** les chambres (10) sont configurées en forme de segments d'anneau dans une portion transversale qui est transversale à la direction longitudinale (L).

8. Câble selon l'une des revendications précédentes, **caractérisé en ce que** celui-ci possède deux extrémités et l'une respective des chambres (10) s'étend de manière ininterrompue de l'une des extrémités à l'autre des extrémités.

9. Câble selon l'une des revendications précédentes, **caractérisé en ce qu'**à l'intérieur d'au moins l'une des chambres (10) est disposé
- un matériau pouvant être activé physiquement en tant que matériau fonctionnel ou
- un fluide d'absorption des chocs ou
- un matériau de changement de phase ou
- un matériau de réparation.

10. Câble selon l'une des revendications précédentes, **caractérisé en ce qu'**au moins l'une des chambres (10) est configurée pour le transport d'un fluide d'exploitation.

11. Procédé de fabrication d'un câble (2), une gaine de câble (8) étant extrudée sur une âme de câble (4), dans laquelle peuvent être pratiquées une pluralité de chambres (10) et au moins une partie des chambres (10) étant remplie d'un matériau fonctionnel (M) lors de l'extrusion ou après celle-ci, le matériau fonctionnel (M) étant réalisé sous la forme d'un système à composantes multiples comprenant au moins deux matériaux (M1, M2) différents qui sont disposés dans des chambres (10) différentes, les au moins deux matériaux (M1, M2) différents réagissant entre eux en cas de contact.

12. Procédé selon la revendication précédente, **caractérisé en ce que** le câble (2) est refroidi après l'extrusion de la gaine de câble (8) et au moins l'une des chambres (10) est à cette occasion remplie d'un retardateur de flamme en tant que matériau fonctionnel (M).

13. Procédé selon l'une des deux revendications précédentes, **caractérisé en ce que** le retardateur de flamme est réticulé après le remplissage des chambres (10).

14. Procédé selon l'une des deux revendications 11 à 13, **caractérisé en ce que** la gaine de câble (8) est fabriquée dans un matériau qui est mis en oeuvre à une température de mise en oeuvre, et **en ce que** le retardateur de flamme possède une température de décomposition qui est inférieure à la température de mise en oeuvre.
